# EUROPEAN PATENT APPLICATION

(11) **EP 1 997 710 A2**
(43) Date of publication of application: **03.12.2008**
(21) Application number: 08380139.9
(22) Date of filing: 06.05.2008
(51) Int. Cl.: B62B 9/08

(54) **A brake device for prams**

(30) Priority: 29.05.2007 ES 200701130
(71) Applicant: JANE S.A., 08184 Palau Solita I Plegamans (ES)
(72) Inventor: Jane Santamaría, Manuel, 08184 Palau Solita I Plegamans (ES)
(74) Representative: Pastells Teixido, Manuel

(57) **Abstract**

A brake device for prams which is operable for jointly acting on the rear wheels (3) being installed on the two sides of the pram, said braking action being carried out by means of one single control (1) being such as to simultaneously act on the two wheels (3) through a rope (2). This device is characterised in that the single control is made up by an articulated lever (4) having two positions namely being an active and a passive one, said positions being secured by means of a lock (7), this latter having been provided on the swivel pin (4') for the control lever (4) and comprising a spring (11) being provided for securing its two positions. The rope (2) being linked to the control lever (4) has two branchings (12,13), one for each wheel (3), each branching ending in an anchoring element (15) at the respective wheel and comprising a spring (20) being provided for securing the braking position.

## Description

### OBJECT OF THE INVETION

A brake device for prams.

### BACKGROUND OF THE INVENTION

As is known, all prams have brakes generally acting on the rear wheels, some of those brakes having separate control elements whereas in some cases a control has been provided which is made up by a pedal being such as to simultaneously act on the two brakes corresponding to either side of the pram, said brake mechanisms being arranged in a visible arrangement.

In patents US-6,817,451 and US-6,367,823 and in the German utility model DE-20310180U brake devices are mentioned whose control is such as to act on the wheels by means of a rope.

### SUMMARY OF THE INVENTION

This invention has as its object a brake device which with one single control is in a position to simultaneously act on the two wheels by means of a rope, the control being located on the handlebar branches and thus being easily accessible for its manual actuation, the brake mechanisms being protected by a cover.

The control is made up by an articulated lever having two positions namely being an active and a passive one, said positions being secured by means of a lock.

The lock has been provided on the lever swivel pin and comprises a spring being provided for securing its two positions.

The rope being linked to the control lever has two branchings, one for each wheel, each branching ending in an anchoring element at the respective wheel and comprising a spring being provided for securing the braking position.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 shows in a perspective view the new brake being installed on one of the sides of the pram;
Fig. 2 shows in a perspective view a detail of the control in its active position;
Fig. 3 illustrates in a cross-sectional view the detail of the lock; and
Fig. 4 is an elevational section of the ending of the two rope branchings with the anchoring element being provided for acting on the wheel.

### DETAILED DESCRIPTION

According to the drawings the brake comprises one single control (1) being by means of a rope (2) in a position to simultaneously act on the two rear wheels (3) of the pram.

The control (1) is made up by a manual actuation lever (4) being rotatable on a pin (4'), all this being installed on a bracket (5) being slidably fitted to one of the branches (6) of the handlebar of the pram.

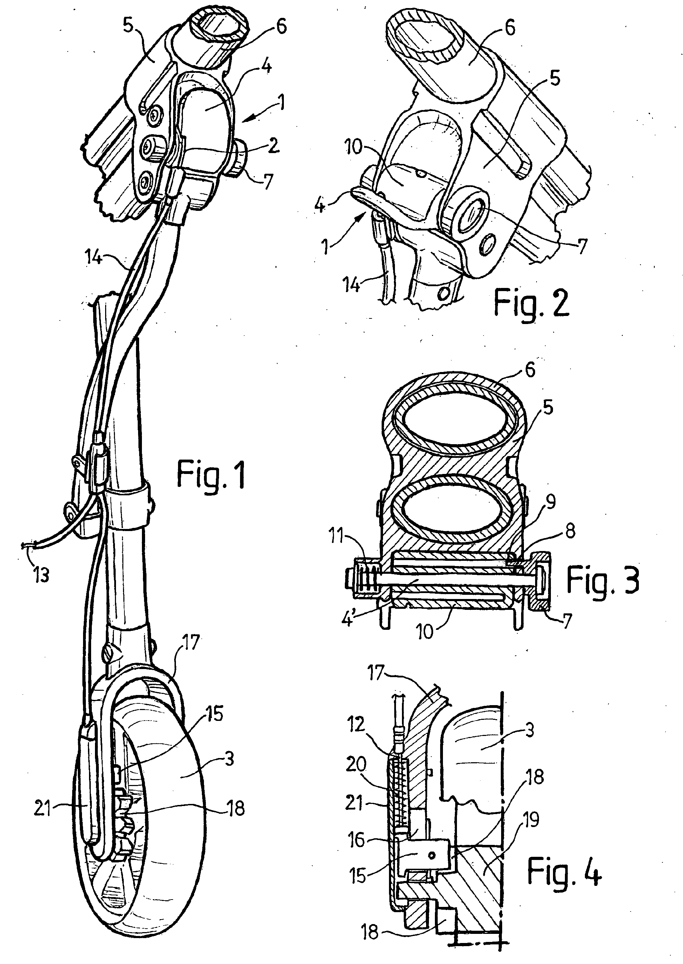

This lever (4) has two positions namely being a passive one (Fig. 1) and an active one (Fig. 2) and is in a position to be stabilised in them by means of a lock (7) being fitted onto the pin (4') and having a stud (8) (Fig. 3) being adapted to be selectively engaged into one of the two holes (9) being provided in the lateral face of the sleeve (10) belonging to the lever (4), said sleeve being rotatably fitted around said pin (4').

This lock (7) comprises a spring (11) being fitted around the pin (4') and serving to secure its two positions.

The rope (2) has two branchings (12) and (13) and is guidedly arranged in a flexible sheath (14) through which it extends, each branching ending in an anchoring element (15) being formed by a small plate extending through a slot (16) of the fork (17) supporting the wheels (3), said small plate being in a position to selectively fit into one of the recesses (18) (Fig. 4) being provided in the side of the wheel hub (19). A respective spring (20) is fitted around the end of each of the branchings (12) or (13) of the rope and is thus in a position to secure the braking position, all this being housed in a casing (21) being fitted to the side of the fork (17).

## Claims

1. A brake device for prams which is operable for jointly acting on the rear wheels (3) being installed on the two sides of the pram, said braking action being carried out by means of one single control (1) being such as to simultaneously act on the two wheels (3) through a rope (2), **characterised in that** the single control (1) is made up by an articulated lever (4) having two positions namely being an active and a passive one, said positions being secured by means of a lock (7), this latter having been provided on the swivel pin (4') for the lever (4) and comprising a spring (11) being provided for securing its two positions.

2. A brake device for prams, as per claim 1, **characterised in that** the rope (2) being linked to the control lever (4) has two branchings (12 and 13), one for each wheel, each branching ending in an anchoring element (15) at the respective wheel and comprising a spring (20) being provided for securing the braking position.
